# EUROPÄISCHE PATENTANMELDUNG

(11) **EP 4 745 522 A1**
(43) Veröffentlichungstag der Anmeldung: **20.05.2026**
(21) Anmeldenummer: 25216144.3
(22) Anmeldetag: 17.11.2025
(51) Int. Cl.: G01C 19/58, G21K 1/30

(54) **VERFAHREN ZUR STEUERUNG EINES ATOMINTERFEROMETERS, ATOMINTERFEROMETER UND COMPUTERPROGRAMM**

(30) Priorität: 19.11.2024 DE 102024133879
(71) Anmelder: Deutsches Zentrum für Luft- und Raumfahrt e.V., 53227 Bonn-Oberkassel (DE)
(72) Erfinder: Gerlach, Sandra, 30559 Hannover (DE); Deppner, Christian, 30453 Hannover (DE); Herr, Waldemar, 30625 Hannover (DE); Schubert, Christian, 30167 Hannover (DE); Ahlers, Holger, 30167 Hannover (DE)
(74) Vertreter: Günther, Constantin

(57) **Zusammenfassung**

Die Erfindung betrifft ein Verfahren zur Steuerung eines Atominterferometers, bei dem wenigstens ein Ensemble von Atomen präpariert und in einem Atominterferometereingangszustand bereitgestellt wird und mittels des wenigstens einen Ensembles von Atomen durch auf das wenigstens eine Ensemble von Atomen einwirkende kohärente Kontrolleingriffe deren Zustand in von dem Atominterferometereingangszustand verschiedene Folgezustände geändert wird und mit dem wenigstens einen Ensemble von Atomen eine Materiewelleninterferometriesequenz durchgeführt wird. Die Erfindung betrifft außerdem ein Atominterferometer, das zur Ausführung eines solchen Verfahrens eingerichtet ist, sowie ein Computerprogramm.

## Beschreibung

Die Erfindung betrifft ein Verfahren zur Steuerung eines Atominterferometers, bei dem wenigstens ein Ensemble von Atomen präpariert und in einem Atominterferometereingangszustand bereitgestellt wird und mittels des wenigstens einen Ensembles von Atomen durch auf das wenigstens eine Ensemble von Atomen einwirkende kohärente Kontrolleingriffe deren Zustand in von dem Atominterferometereingangszustand verschiedene Folgezustände geändert wird und mit dem wenigstens einen Ensemble von Atomen eine Materiewelleninterferometriesequenz durchgeführt wird. Die Erfindung betrifft außerdem ein Atominterferometer, das zur Ausführung eines solchen Verfahrens eingerichtet ist, sowie ein Computerprogramm.

Atominterferometer bieten z.B. die Möglichkeit für langzeitstabile Rotations- und Beschleunigungsmessungen, einschließlich Schwerefeldmessungen, der Messung von Gravitationsgradienten, und prinzipiell auch von Magnetfeldern. Verglichen zu verbreiteten konventionellen Geräten zeichnen sie sich durch eine prinzipiell erreichbare Absolutgenauigkeit aus bzw. gegenüber dem verbreiteten Lasergravimeter FG5X durch die Möglichkeit quasikontinuierlicher Messungen über längere Zeiträume und möglicher höherer Genauigkeit. Es existieren bereits kommerzielle und transportable Versionen, mit denen z.B. ein Einsatz in der See- und Fluggravimetrie demonstriert wurde. Eine Herausforderung im mobilen Einsatz ist die dynamische Umgebung. Diese kann dazu führen, dass die potentielle Sensitivität des Atominterferometers von vorneherein eingeschränkt werden muss, damit potentielle oder spontane Störeinflüsse nicht zu einem Verlassen des Dynamikbereichs führen, bei dem kein Interferenzsignal bzw. -muster mehr ausgelesen werden kann.

Der Erfindung liegt die Aufgabe zugrunde, ein Verfahren zur Steuerung eines Atominterferometers mit erhöhter Messgenauigkeit und Störunempfindlichkeit, ein Atominterferometer und ein Computerprogramm dafür anzugeben.

Diese Aufgabe wird bei einem Verfahren der eingangs genannten Art dadurch gelöst, dass wenigstens ein Parameter der Materiewelleninterferometriesequenz in Echtzeit in Abhängigkeit von wenigstens einer beim Betrieb des Atominterferometers ermittelten Kenngröße automatisch verändert wird. Im Unterschied zum Stand der Technik erfolgt beim erfindungsgemäßen Verfahren eine dynamische Anpassung von wenigstens einem oder mehreren Parametern der Materiewelleninterferometriesequenz in Echtzeit, was somit eine echtzeitkontrollierte Anpassung der Atominterferometer-Parameter und dementsprechend eine dynamische Optimierung der Sensitivität ermöglicht. Zudem können Störeinflüsse dynamisch kompensiert werden.

Das zuvor genannte Ensemble von Atomen, das in der Literatur zum Teil auch als Atomensemble oder Atomwolke bezeichnet wird, kann auch als Materiewelle(n) oder als Atome beschrieben werden, die sich in einem kohärenten Superpositionszustand befinden. Als allgemeiner Oberbegriff soll in dieser Anmeldung hierfür der Ausdruck "Ensemble von Atomen" verwendet werden.

Das Ensemble von Atomen befindet sich zu Beginn in einem Atominterferometereingangszustand, wobei dieser den Zustand nach Kühlverfahren und / oder anderen Präparationsschritten, sonstigen Manipulationen, oder allgemein den Zustand vor den nun folgenden Schritten beschreibt, der insbesondere vor der Durchführung der kohärenten Kontrolleingriffe der Materiewelleninterferometriesequenz vorliegt. Es wird dann die Materiewelleninterferometriesequenz mit mehreren kohärenten Kontrolleingriffen durchgeführt, in der das Ensemble von Atomen einen oder mehrere voneinander verschiedene Folgezustände haben kann, z.B. ab dem ersten bis zum letzten kohärenten Kontrolleingriff.

Solche kohärenten Kontrolleingriffe können z.B. die Abgabe von Lichtpulsen, z.B. von einem Laser oder einer anderen Lichtquelle, Magnetfeldgradienten und/oder Mikrowellenpulsen auf das wenigstens eine Ensemble von Atomen sein, oder allgemein gesagt beliebige Methoden zur kohärenten Manipulation des Ensembles von Atomen, also eine Form der Quantenkontrolle, die die Welleneigenschaften von Materie nutzt, um die zeitliche Entwicklung eines Quantensystems auf eine gewünschte Art und Weise zu steuern. Im Laufe der Materiewelleninterferometriesequenz werden in der Regel mehrere kohärente Kontrolleingriffe durchgeführt. Der Begriff "Puls" wird als Oberbegriff für beliebige Arten von periodischen und nicht-periodischen Ereignissen verstanden, wobei der Begriff "Puls" auch einen Impuls erfasst, z.B. in Form einer sich periodisch wiederholenden Abfolge von Impulsen, sich periodisch wiederholenden impuls- oder stoßartigen Ereignissen und/oder im Falle eines Lichtpulses ein zeitlich einmalig oder mehrmalig auftretendes Auf- und Abschwellen der Lichtleistung.

Unter der Annahme von Atomen im freien Fall wird die Sensitivität eines Atominterferometers maßgeblich durch die effektive Wellenzahl, die Pulsseparationszeit, sowie u. U. die Anzahl der Schleifen gegeben, durch die sich die Geometrie des Atominterferometers definiert. Eine typische Atominterferometergeometrie für Rotations- oder Beschleunigungsmessungen besteht aus drei aufeinanderfolgenden Lichtpulsen oder vergleichbaren kohärenten Kontrolleingriffen, die durch eine Freifallzeit bzw. freie Expansionszeit getrennt sind. Bei jeder Wechselwirkung während eines dieser kohärenten Kontrolleingriffe wird Impuls auf die Atome übertragen, bzw. diese in einen Superpositionszustand zweier Impulszustände gebracht. Statt eines jeweiligen einzelnen pulsförmigen kohärenten Kontrolleingriffs kann ein Kompositpuls bestehend aus mehreren Einzelpulsen eingesetzt werden, was den Impulsübertrag bzw. die effektive Wellenzahl erhöht. Zusätzlich oder alternativ kann z.B. für die Messung von Rotationen eine Geometrie mit mehreren Schleifen, bestehend aus z.B. vier oder mehr kohärenten Kontrolleingriffen, z.B. unter Verwendung von kohärenten Relaunch-Kontrolleingriffen, eingesetzt werden, was effektiv die eingeschlossene Fläche und damit die potentielle Sensitivität erhöht. Effektive Wellenzahl, die Pulsseparationszeit, sowie u. U. die Anzahl der Schleifen werden im Allgemeinen vor Beginn der Messkampagne entsprechend der technischen Gegebenheiten bzw. der Umgebungsbedingungen festgelegt.

Gemäß einer vorteilhaften Ausgestaltung der Erfindung ist vorgesehen, dass als wenigstens einer der Parameter der Materiewelleninterferometriesequenz der Skalierungsfaktor der Materiewelleninterferometriesequenz in Echtzeit in Abhängigkeit von wenigstens einer beim Betrieb des Atominterferometers ermittelten Kenngröße automatisch verändert wird. Der Skalierungsfaktor der Materiewelleninterferometriesequenz kann z.B. durch die effektive Wellenzahl des Strahlteilerlichtfelds und die Pulsseparationszeit der kohärenten Kontrolleingriffe, z.B. der Lichtpulse, definiert sein. Ein Materiewelleninterferometer misst einen Phasenversatz, der sich abhängig von einer Störgröße, z.B. einer Beschleunigung bei einem Akzelerometer auf Basis der Materiewelleninterferometrie oder einer Rotation bei einem Rotationssensor auf Basis der Materiewelleninterferometrie, ändert. Der von der Störgröße (S) abhängige Phasenversatz (P) skaliert dabei mit einem Skalierungsfaktor (F), entsprechend der Formel P = F * S und der üblichen Verwendung bei konventioneller Sensorik. Typischerweise hängt der Skalierungsfaktor der Materiewelleninterferometriesequenz sowohl von der effektiven Wellenzahl (k) und der Pulsseparationszeit (T) ab, z.B. in typischen Umsetzungen in führender Ordnung F = k * T². Andere Abhängigkeiten bzw. Skalierungen sind möglich.

Gemäß einer vorteilhaften Ausgestaltung der Erfindung ist vorgesehen, dass als wenigstens einer der Parameter der Materiewelleninterferometriesequenz
a) die effektive Wellenzahl, zeitliche Pulsformen oder andere Eigenschaften der Lichtpulse oder Kompositlichtpulse oder eine vergleichbare Größe einer anderen Art von kohärenten Kontrolleingriffen,
b) die Freifallzeit des Ensembles von Atomen,
c) die Separationszeit zwischen aufeinanderfolgenden kohärenten Kontrolleingriffen, z.B. zwischen den Lichtpulsen,
d) im Fall einer Mehrschleifenkonfiguration der Materiewelleninterferometriesequenz die Anzahl der Schleifen,
e) die Geometrie der Materiewelleninterferometriesequenz
in Echtzeit in Abhängigkeit von wenigstens einer beim Betrieb des Atominterferometers ermittelten Kenngröße automatisch verändert wird. Durch Anpassung eines oder mehrerer zuvor genannten Parameter kann eine besonders effiziente dynamische Optimierung der Sensitivität eines Atominterferometers in Echtzeit erfolgen. Beispielsweise kann die Freifallzeit durch Verkürzung oder Verlängerung der Pulsseparationszeit zwischen den aufeinanderfolgenden kohärenten Kontrolleingriffen verändert werden. Zur Beeinflussung des Parameters effektive Wellenzahl kann der Wellenvektor wenigstens eines Lichtpulses der Materiewelleninterferometriesequenz oder eine vergleichbare Größe einer anderen Art von kohärentem Kontrolleingriff automatisch verändert werden. Die Geometrie der Materiewelleninterferometriesequenz kann zum Beispiel durch Veränderung Anzahl der kohärenten Kontrolleingriffe, deren zeitliche Lage und/oder deren Stärke (z.B. Amplitude, Energieinhalt) automatisch verändert werden.

Gemäß einer vorteilhaften Ausgestaltung der Erfindung ist vorgesehen, dass der wenigstens eine Parameter der Materiewelleninterferometriesequenz innerhalb ein und derselben Materiewelleninterferometriesequenz in Echtzeit in Abhängigkeit von wenigstens einer beim Betrieb des Atominterferometers ermittelten Kenngröße automatisch verändert wird. Dies ermöglicht sofortige, sehr schnelle Echtzeit-Eingriffe im Verlauf einer jeweiligen Materiewelleninterferometriesequenz, d.h. zwischen dem Beginn und dem Ende einer solchen Interferometriesequenz.

Alternativ oder zusätzlich kann der wenigstens eine Parameter der Materiewelleninterferometriesequenz auch derart in Echtzeit automatisch verändert werden, dass eine Veränderung von einer Materiewelleninterferometriesequenz zur nächsten oder einer der nächsten Materiewelleninterferometriesequenzen erfolgt.

Gemäß einer vorteilhaften Ausgestaltung der Erfindung ist vorgesehen, dass als Ensemble von Atomen eine Atomwolke oder ein Atomstrahl verwendet wird. Auf diese Weise ist das Verfahren bei unterschiedlichsten Arten von Atominterferometern und Interferometriesequenzen anwendbar.

Gemäß einer vorteilhaften Ausgestaltung der Erfindung ist vorgesehen, dass die wenigstens eine Kenngröße durch wenigstens einen vom Atominterferometer separaten Sensor, vorangegangene Messungen des Atominterferometers und/oder zusätzliche Messungen, die Informationen über die Umgebung des Atominterferometers und/oder Informationen über das Atominterferometer selbst liefern, bestimmt wird. Dies ermöglicht wahlweise sowohl die Einbeziehung sowohl aktueller bzw. durch das Atominterferometer selbst ermittelter Größen als auch externer Größen, die durch wenigstens einen separaten Sensor erfasst werden.

Gemäß einer vorteilhaften Ausgestaltung der Erfindung ist vorgesehen, dass das Atominterferometer anhand einer rechnerischen Modellierung nachgebildet wird, wobei durch die Modellierung der Einfluss von externen Störungen auf das Atominterferometer bestimmbar ist, wobei der wenigstens eine Parameter der Materiewelleninterferometriesequenz anhand einer durch die Modellierung bestimmten Kenngröße automatisch verändert wird. Hierdurch kann das Atominterferometer besonders störunanfällig betrieben werden, wobei die Steuerung des Atominterferometers prädiktiv erfolgen kann, indem anhand der rechnerischen Modellierung der Einfluss zukünftiger Störungen vorhergesagt wird und dementsprechend vor Eintreten der Störung entsprechende Gegenmaßnahmen ergriffen werden können.

Gemäß einer vorteilhaften Ausgestaltung der Erfindung ist vorgesehen, dass die Materiewelleninterferometriesequenz Strahlteileroperationen in Form von Kompositpulsen enthalten kann, die aus einer Vielzahl zeitlich eng aufeinander folgender kurzer Einzelpulse bestehen und insgesamt eine Strahlteileroperation der Materiewelleninterferometriesequenz bilden. Durch solche Kompositpulse ist der Ablauf der Interferometriesequenz noch besser steuerbar. Insbesondere ist es möglich, durch Abgabe mehrerer Einzelpulse eine adaptive Annäherung an den erforderlichen Gesamtimpulsübertrag durchzuführen.

Gemäß einer vorteilhaften Ausgestaltung der Erfindung ist vorgesehen, dass zur Beeinflussung des Parameters effektive Wellenzahl oder einer vergleichbaren Größe einer anderen Art von kohärenten Kontrolleingriffen die Anzahl, die Dauer und/oder der Abstand von Einzelpulsen in einem Kompositpuls automatisch verändert wird. Hierdurch werden die Adaptionsmöglichkeiten bei der Anwendung von Kompositpulsen weiter verbessert.

Die eingangs genannte Aufgabe wird außerdem gelöst durch ein Atominterferometer mit wenigstens einer Atomfalle und wenigstens einer steuerbaren kohärenten Signalquelle zur Abgabe von kohärenten Kontrolleingriffen der Materiewelleninterferometriesequenz, kohärenten Strahlteiler-Kontrolleingriffen und/oder kohärenten Relaunch-Kontrolleingriffen, und mit wenigstens einer Steuereinrichtung zur Steuerung wenigstens der wenigstens einen kohärenten Signalquelle, wobei die Steuereinrichtung zur Ausführung eines Verfahrens der zuvor erläuterten Art eingerichtet ist. Auch hierdurch können die zuvor erläuterten Vorteile realisiert werden.

Die eingangs genannte Aufgabe wird außerdem gelöst durch ein Computerprogrammprodukt umfassend Befehle, die bewirken, dass das Atominterferometer der zuvor beschriebenen Art die Verfahrensschritte der zuvor beschriebenen Art ausführt, wenn das Computerprogramm auf einem Rechner der Steuereinrichtung des Atominterferometers ausgeführt wird. Auch hierdurch können die zuvor erläuterten Vorteile realisiert werden. Das Computerprogramm kann auf einem Speichermedium gespeichert sein. Das Computerprogramm kann als Software, Firmware oder Hardwareprogrammierung eines PLD (programmable logic device) oder als Kombination daraus ausgeführt sein.

Die Erfindung eignet sich z.B. für Anwendungen im Bereich der Navigation, für Rotations- und Beschleunigungsmessung, z.B. als Teil einer inertialen Quantenmesseinheit zur Unterstützung oder an Stelle konventioneller inertialen Messeinheiten, insbesondere in Bereichen ohne verlässliches globales Navigationssystem (GNSS).

Die Erfindung kann insbesondere folgende Komponenten beinhalten, wobei die Komponenten 2 und 3 optional sind:
1. das Atominterferometer, mit dem in einer dynamischen Umgebung Messungen durchgeführt werden sollen, bspw. für die Navigation oder Fluggravimetrie,
2. externe Sensoren und/oder zusätzlichen Messungen, die Informationen über die Umgebung liefern und/oder Informationen über das Atominterferometer selbst bei minimaler Störung des Atominterferometers (bspw. sog. "quantum non-demolition measurements"),
3. ein Modell, dass den Einfluss der Störungen auf das Atominterferometer vorhersagen kann, bspw. die Bewegung der freifallenden Atome aus dem Strahlteilerpulsfeld heraus,
4. ein Computersystem mit einem Algorithmus, der wenigstens einen Parameter der Materiewelleninterferometriesequenz in Echtzeit in Abhängigkeit von wenigstens einer beim Betrieb des Atominterferometers ermittelten Kenngröße automatisch verändert, z.B. einer Kenngröße auf Basis der Sensordaten/Informationen aus 2. und/oder des Modells.

Mögliche Anpassungen wenigstens eines Parameters der Materiewelleninterferometriesequenz sind:
1. die Änderung der Anzahl der Einzelpulse im ersten Strahlteilerkompositpuls und entsprechende Anpassung der folgenden Kompositpulse und/oder
2. die Verkürzung oder Verlängerung der Pulsseparationszeit, z.B.
   a. nachdem der erste Strahlteiler(komposit)puls appliziert wurde,
   b. nachdem der vorletzte Strahlteiler(komposit)puls appliziert wurde in Kombination mit einer Änderung des Impulsübertrags durch den vorletzten Strahlteiler(komposit)puls, sodass das Interferometer früher oder später schließt als in der eingänglichen Initialisierung vorgesehen,
   c. in einer 4-Pulsgeometrie (Ramsey-Bordé-Interferometer) die Zeit zwischen zweitem und drittem Puls, nach Bedarf in Kombination mit einer Anpassung der Anzahl von Relaunch-Kontrolleingriffen, die während dieser Zeit die Atome wieder hochwirft, um die Beschleunigung durch die Schwerkraft auszugleichen, und / oder
3. die Änderung der Anzahl der Schleifen des Atominterferometers, soweit eine Mehrschleifengeometrie prinzipiell unterstützt wird.

Die Erfindung ist auch auf gefangene bzw. geführte Interferometer anwendbar. Die Strahlteilerpulse werden hierbei ggf. durch eine andere Methode ersetzt, die je nach Implementierung ggf. ähnlich angepasst werden kann. Die genannten Pulse können jeweils als kohärente Kontrolleingriffe ausgebildet sein, z.B. als Lichtpulse.

Im Sinne der vorliegenden Erfindung ist unter dem unbestimmten Begriff "ein" kein Zahlwort zu verstehen. Wenn also z.B. von einem Bauteil die Rede ist, so ist dies im Sinne von "mindestens einem Bauteil" zu interpretieren. Soweit Winkelangaben in Grad gemacht werden, beziehen sich diese auf ein Kreismaß von 360 Grad (360°).

Soweit ein Rechner erwähnt ist, kann dieser dazu eingerichtet sein, ein Computerprogramm, z.B. im Sinne von Software, auszuführen. Der Rechner kann als handelsüblicher Computer ausgebildet sein, z.B. als PC, Laptop, Notebook, Tablet oder Smartphone, oder als Mikroprozessor, Mikrocontroller oder FPGA, oder als Kombination aus solchen Elementen.

Die Erfindung wird nachfolgend anhand von Ausführungsbeispielen unter Verwendung von Zeichnungen näher erläutert.

Es zeigen
Figur 1 - den Ablauf eines Verfahrens zur Atominterferometrie in schematischer Darstellung,
Figur 2 - eine Drei-Puls-Interferometriesequenz,
Figur 3 - eine weitere Drei-Puls-Interferometriesequenz,
Figur 4 - eine weitere Drei-Puls-Interferometriesequenz,
Figur 5 - eine Vier-Puls- Interferometriesequenz,
Figur 6 - eine Interferometriesequenz in einer Mehrschleifenkonfiguration,
Figur 7 - ein Atominterferometer in schematischer Darstellung in der x-z-Ebene,
Figur 8 - das Atominterferometer gemäß Figur 7 in der x-y-Ebene.

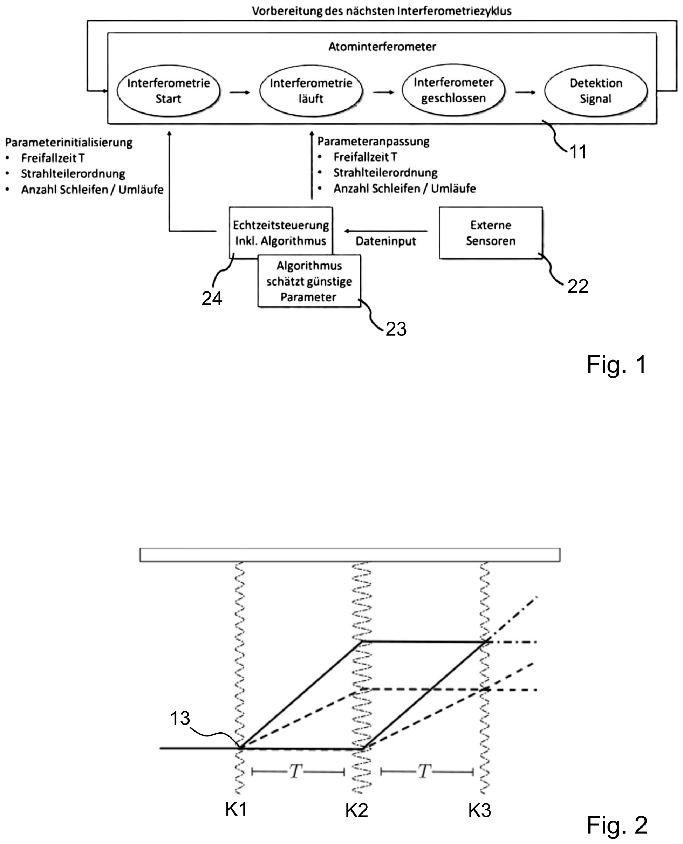

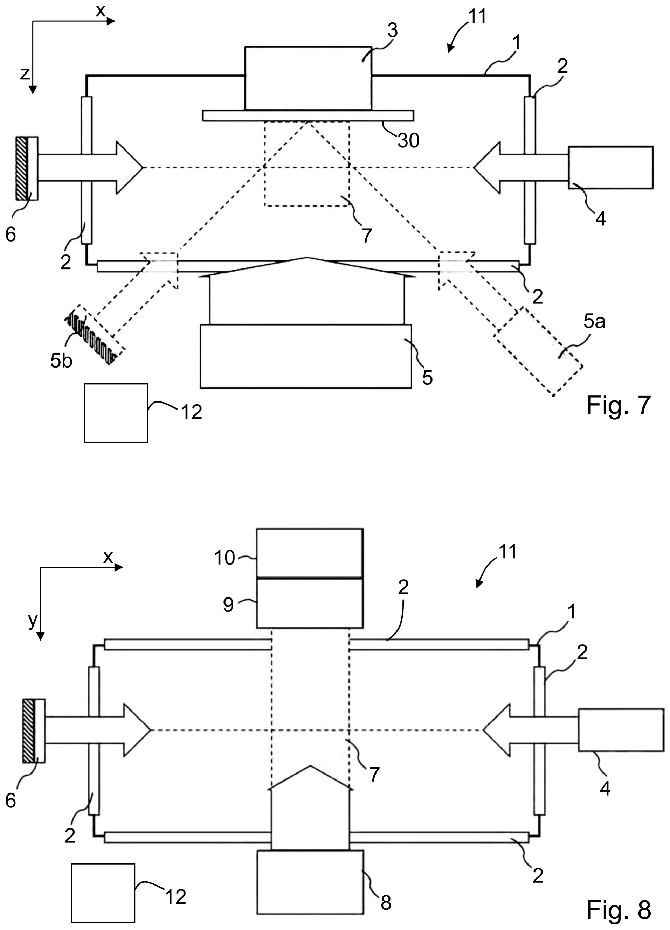

Die Figur 1 zeigt schematisch die Elemente Atominterferometer 11, externe Sensoren 22, eine rechnerische Modellierung 23 des Atominterferometers 11 und einen Algorithmus 24, z.B. in Form eines Computerprogramms, zur Durchführung des erfindungsgemäßen Verfahrens zur Echtzeit-Anpassung wenigstens eines Parameters der Materiewelleninterferometriesequenz. Die rechnerische Modellierung 23 und der Algorithmus 24 können auf einem Computersystem ausgeführt werden. Die Figur 1 zeigt zudem die Interaktion der erwähnten Elemente zur dynamischen Optimierung bzw. Anpassung der Parameter Freifallzeit, Strahlteilerordnung und Anzahl Schleifen/Umläufe. Das Atominterferometer ist darin durch einen physischen Aufbau repräsentiert, der typischerweise aus einem Vakuumsystem, Optiken, Spulen und weiteren Peripherieelementen besteht, die für die Laserkühlung der Atome, der kohärenten Manipulation zur Implementierung der Interferometrie und der Detektion benötigt werden, z.B. wie nachfolgend noch anhand der Figuren 7, 8 erläutert wird.

Die Figur 2 zeigt die exemplarische Darstellung einer Drei-Puls-Materiewelleninterferometriesequenz, d.h. mit drei auf das wenigstens eine Ensemble von Atomen 13 einwirkenden kohärenten Kontrolleingriffen K1, K2, K3. Die drei kohärenten Kontrolleingriffe K1, K2, K3 spannen das Interferometer auf und schließen es (Puls K3). Die Trajektorien des Interferometers sind zwischen K1 und K3 dargestellt, die Interferometerausgänge sind strichpunktiert rechts von K3 dargestellt. Die Sensitivität des Interferometers auf Beschleunigungen skaliert in erster Ordnung linear mit der effektiven Wellenzahl des Strahlteilerlichtfeldes, mit dem Impuls auf die Atome übertragen wird. Die erfindungsgemäße Echtzeitsteuerung ermöglicht das Anpassen dieser effektiven Wellenzahl, bevor der erste Puls K1 bereits appliziert wurde oder während die erste Strahlteilungsoperation höherer Ordnung stattfinden, z.B. können bei einem Kompositpuls Teilpulse hinzugefügt oder weggelassen werden. Gestrichelt dargestellt ist eine Konfiguration mit reduziertem Impulsübertrag bzw. reduzierter effektiver Wellenzahl, vergleichen mit den in durchgezogenen Linien dargestellten Trajektorien.

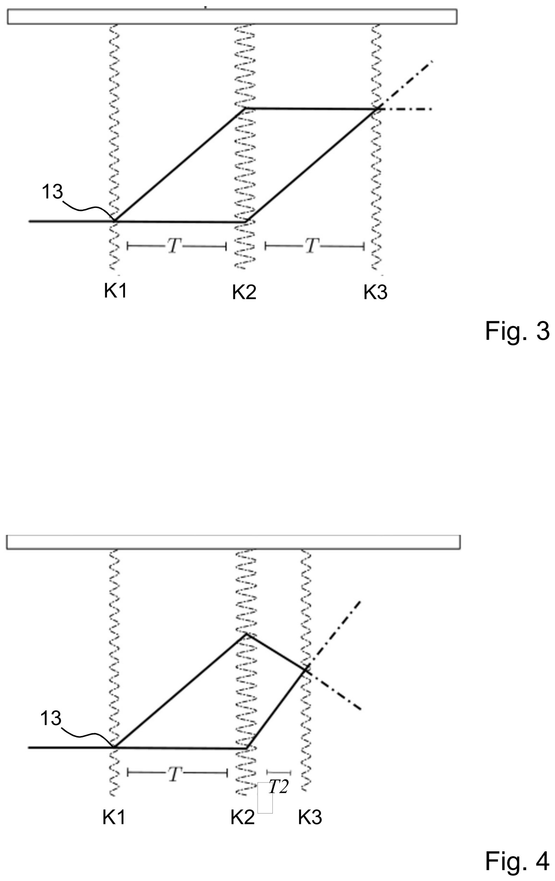

Die Figur 3 zeigt eine weitere exemplarische Darstellung einer Drei-Puls-Materiewelleninterferometriesequenz. Die Trajektorien des Interferometers sind zwischen K1 und K3 mit durchgezogenen Linien dargestellt, die Interferometerausgänge sind strichpunktiert rechts von K3 dargestellt. Drei kohärente Kontrolleingriffe K1, K2, K3 spannen das Interferometer auf und schließen es. Die Sensitivität des Interferometers auf Beschleunigungen skaliert in erster Ordnung quadratisch mit der Pulsseparationszeit T. Die erfindungsgemäße Echtzeitsteuerung ermöglicht das Anpassen dieser Pulsseparationszeit T, nachdem der erste Puls K1 bereits appliziert wurde.

Die Figur 4 zeigt Figur bei vergleichbarer Ausgangssituation wie in Figur 3 ein Verkürzen der letzten Pulseparationszeit auf den Wert T2 durch einen höheren Impulsübertrag beim vorletzten und letzten Puls K2, K3 durch die erfindungsgemäße Echtzeitsteuerung.

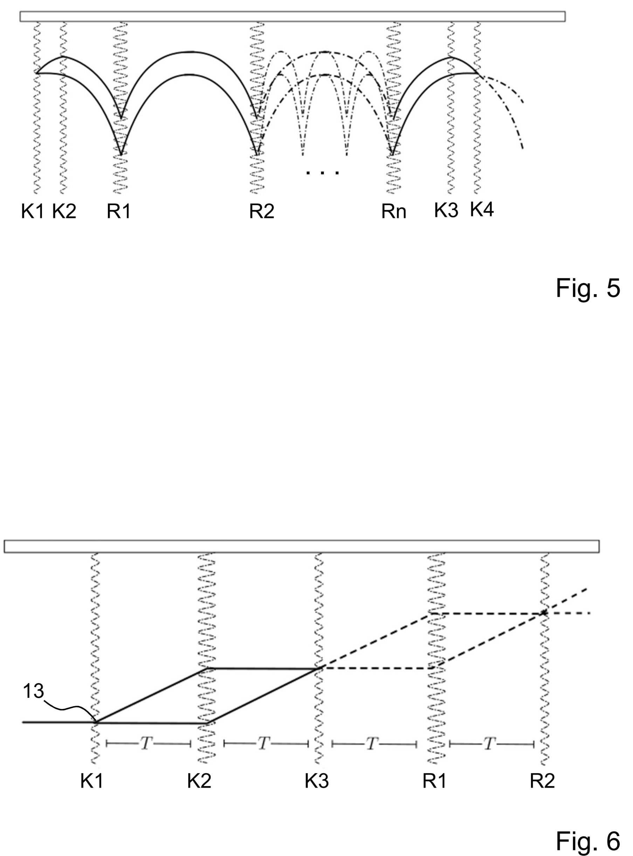

Figur 5 zeigt eine exemplarische Darstellung einer Vier-Puls-Materiewelleninterferometriesequenz, d.h. mit vier auf das wenigstens eine Ensemble von Atomen 13 einwirkenden kohärenten Kontrolleingriffen K1, K2, K3, K4. Die Trajektorien des Interferometers sind mit durchgezogenen Linien dargestellt, die Interferometerausgänge sind strichpunktiert rechts von K4 dargestellt. Die vier kohärenten Kontrolleingriffe K1, K2, K3, K4 spannen das Interferometer auf und schließen es. Die Zeit zwischen 2. Puls K2 und letztem Puls K4 kann mit einer Echtzeitsteuerung variiert werden. Optional können weitere Pulse, insbesondere in Form von kohärenten Relaunch-Kontrolleingriffen R1, R2, Rn, appliziert werden, die beide Trajektorien gleichzeitig adressieren und die Atome wieder hochwerfen, um die Erdbeschleunigung zu kompensieren, um so eine längere Freifallzeit zu ermöglichen. Die weiteren Pulse R1, R2, Rn können prinzipiell in beliebiger Zahl appliziert werden.

Die Figur 6 zeigt eine exemplarische Darstellung einer Mehrschleifengeometrie bzw. Mehrschleifenkonfiguration (,multi-Ioop'). Der Ablauf kann mit einer Drei-Puls-Materiewelleninterferometriesequenz mit den kohärenten Kontrolleingriffen K1, K2, K3 beginnen. Dann folgen eine oder mehrere Schleifen, z.B. durch Applizieren von kohärenten Relaunch-Kontrolleingriffen R1, R2 auf das wenigstens eine Ensemble von Atomen 13. Die zweite Schleife mit dem Puls R2 kann weggelassen werden, in diesem Fall wird das Interferometer nach einer Schleife mit dem Puls K3 nach einer Zeit 2T vorzeitig geschlossen. Alternativ könnten stattdessen auch weitere Schleifen nach einer Zeit von 4T ergänzt werdende nach Umgebungsbedingungen. Durch die erfindungsgemäße Echtzeitsteuerung kann die die Anzahl der Schleifen gesteuert werden.

Die Figuren 7 und 8 zeigen ein Atominterferometer 11 in vereinfachter schematischer Darstellung, insbesondere in Hinblick auf die Optik-Implementierung in einem Sensorkopf. Das Atominterferometer 11 hat eine Vakuumkammer 1, die an mehreren Seiten optisch transparente Sichtfenster 2 hat. Die Vakuumkammer 1 kann z.B. eine kubische Form haben. Das Atominterferometer 11 hat außerdem eine Atomfalle 3, z.B. einen Atomchiphalter mit einem Atomchip 30, z.B. mit einer hochreflektierenden Oberfläche. Alternativ kann das Atominterferometer 11 auch eine andere Art von Atomfalle haben, z.B. eine optische Dipolfalle oder eine magnetooptische Atomfalle (MOT magnet-optical trap). Im Falle einer optischen Dipolfalle können die Sichtfenster 2 auch durchlässig für optische Dipolfallen-Laserstrahlen und hochreflektierend für Relaunch-Laserstrahlen oder sonstige kohärente Kontrolleingriffe sein.

Das Atominterferometer 11 hat ferner eine Strahlformungsoptik 4, z.B. für den initialen Impulsübertrag für den Übergang des in der Atomfalle 3 gefangenen Ensembles von Atomen in den Startzustand. Die Strahlformungsoptik 4 kann z.B. einen oder mehrere Kollimatoren, und/oder Flat-Top- oder Top-Hat-Strahlformer umfassen. Ferner hat das Atominterferometer 11 eine Strahlformungsoptik 5 für die Interferometrie- und Relaunch-Laserstrahlen bzw. allgemein für die kohärenten Kontrolleingriffe, z.B. Kontrolleingriffe der Materiewelleninterferometriesequenz, Strahlteiler-Kontrolleingriffen und/oder Relaunch-Kontrolleingriffen. Die Strahlformungsoptik 5 liegt der Atomfalle 3 diametral gegenüber. Das Atominterferometer 11 hat außerdem einen Spiegel 6, der der Strahlformungsoptik 4 diametral gegenüberliegend angeordnet ist. Alternativ zu der beschriebenen Strahlformungsoptik 5 kann das Atominterferometer 11 auch eine schräg zur Atomfalle 3 angeordnete Strahlformungsoptik 5a und einen damit zusammenwirkenden Spiegel 5b haben, durch den die Strahlen der Strahlformungsoptik 5a reflektiert werden.

Die Strahlformungsoptik 5, 5a und/oder der Spiegel 5b können fest justiert sein oder einstellbar sein. Sie können auch motorisiert einstellbar sein, um beispielsweise den Winkel von kohärenten Relaunch-Kontrolleingriffen einstellen zu können. Das Atominterferometer 11 hat ferner übliche bekannte Elemente solcher Atominterferometer, die zur Vereinfachung nicht eingezeichnet sind, wie z.B. Spulen, eine 2D-magnetooptische Falle.

Das Atominterferometer 11 hat außerdem eine Strahlformungsoptik 8 für die Einspeisung von Detektionslicht (für eine Absorptionsaufnahme) in die Vakuumkammer 1 sowie wenigstens eine Kamera 10 für die Detektion der Interferometerausgänge, z.B. eine CCD- oder CMOS-Kamera mit einer vorgeschalteten Detektionsoptik 9, z.B. ein Doppellinsensystem zur Vergrößerung und/oder Verkleinerung und ggf. zur Streulichtunterdrückung. Die Interferometerausgänge werden dabei in einem Detektionsbereich 7 in der Vakuumkammer 1 ausgewertet.

## Patentansprüche

1. Verfahren zur Steuerung eines Atominterferometers (11), bei dem wenigstens ein Ensemble von Atomen (13) präpariert und in einem Atominterferometereingangszustand bereitgestellt wird und mittels des wenigstens einen Ensembles von Atomen (13) durch auf das wenigstens eine Ensemble von Atomen (13) einwirkende kohärente Kontrolleingriffe (K1, K2, K3, K4) deren Zustand in von dem Atominterferometereingangszustand verschiedene Folgezustände geändert wird und mit dem wenigstens einen Ensemble von Atomen (13) eine Materiewelleninterferometriesequenz durchgeführt wird, **dadurch gekennzeichnet, dass** wenigstens ein Parameter der Materiewelleninterferometriesequenz in Echtzeit in Abhängigkeit von wenigstens einer beim Betrieb des Atominterferometers (11) ermittelten Kenngröße automatisch verändert wird.

2. Verfahren nach Anspruch 1, **dadurch gekennzeichnet, dass** als wenigstens einer der Parameter der Materiewelleninterferometriesequenz der Skalierungsfaktor der Materiewelleninterferometriesequenz in Echtzeit in Abhängigkeit von wenigstens einer beim Betrieb des Atominterferometers (11) ermittelten Kenngröße automatisch verändert wird.

3. Verfahren nach einem der vorhergehenden Ansprüche, **dadurch gekennzeichnet, dass** als wenigstens einer der Parameter der Materiewelleninterferometriesequenz
a) die effektive Wellenzahl, zeitliche Pulsformen oder andere Eigenschaften der Lichtpulse oder Kompositlichtpulse oder eine vergleichbare Größe einer anderen Art von kohärenten Kontrolleingriffen (K1, K2, K3, K4),
b) die Freifallzeit des Ensembles von Atomen,
c) die Separationszeit zwischen aufeinanderfolgenden kohärenten Kontrolleingriffen (K1, K2, K3, K4),
d) im Fall einer Mehrschleifenkonfiguration der Materiewelleninterferometriesequenz die Anzahl der Schleifen,
e) die Geometrie der Materiewelleninterferometriesequenz,
in Echtzeit in Abhängigkeit von wenigstens einer beim Betrieb des Atominterferometers (11) ermittelten Kenngröße automatisch verändert wird.

4. Verfahren nach einem der vorhergehenden Ansprüche, **dadurch gekennzeichnet, dass** der wenigstens eine Parameter der Materiewelleninterferometriesequenz innerhalb ein und derselben Materiewelleninterferometriesequenz in Echtzeit in Abhängigkeit von wenigstens einer beim Betrieb des Atominterferometers (11) ermittelten Kenngröße automatisch verändert wird.

5. Verfahren nach einem der vorhergehenden Ansprüche, **dadurch gekennzeichnet, dass** zur Beeinflussung des Parameters effektive Wellenzahl der Wellenvektor wenigstens eines Lichtpulses der Materiewelleninterferometriesequenz oder eine vergleichbare Größe einer anderen Art von kohärentem Kontrolleingriff (K1, K2, K3, K4) automatisch verändert wird.

6. Verfahren nach einem der vorhergehenden Ansprüche, **dadurch gekennzeichnet, dass** als Ensemble von Atomen (13) eine Atomwolke oder ein Atomstrahl verwendet wird.

7. Verfahren nach einem der vorhergehenden Ansprüche, **dadurch gekennzeichnet, dass** die wenigstens eine Kenngröße durch wenigstens einen vom Atominterferometer (11) separaten Sensor (22), vorangegangene Messungen des Atominterferometers (11) und/oder zusätzliche Messungen, die Informationen über die Umgebung des Atominterferometers (11) und/oder Informationen über das Atominterferometer (11) selbst liefern, bestimmt wird.

8. Verfahren nach einem der vorhergehenden Ansprüche, **dadurch gekennzeichnet, dass** das Atominterferometer (11) anhand einer rechnerischen Modellierung (23) nachgebildet wird, wobei durch die Modellierung (23) der Einfluss von externen Störungen auf das Atominterferometer (11) bestimmbar ist, wobei der wenigstens eine Parameter der Materiewelleninterferometriesequenz anhand einer durch die Modellierung (23) bestimmten Kenngröße automatisch verändert wird.

9. Verfahren nach einem der vorhergehenden Ansprüche, **dadurch gekennzeichnet, dass** die Materiewelleninterferometriesequenz Strahlteileroperationen in Form von Kompositpulsen enthält, die aus einer Vielzahl zeitlich aufeinander folgender kurzer Einzelpulse bestehen und insgesamt eine Strahlteileroperation der Materiewelleninterferometriesequenz bilden.

10. Verfahren nach Anspruch 9, **dadurch gekennzeichnet, dass** zur Beeinflussung des Parameters effektive Wellenzahl oder einer vergleichbaren Größe einer anderen Art von kohärenten Kontrolleingriffen (K1, K2, K3, K4) die Anzahl, die Dauer und/oder der zeitliche Abstand von Einzelpulsen in einem Kompositpuls automatisch verändert wird.

11. Atominterferometer (11) mit wenigstens einer Atomfalle (3) und wenigstens einer steuerbaren kohärenten Signalquelle zur Abgabe von kohärenten Kontrolleingriffen (K1, K2, K3, K4) der Materiewelleninterferometriesequenz, kohärenten Strahlteiler-Kontrolleingriffen und/oder kohärenten Relaunch-Kontrolleingriffen (R1, R2, Rn), und mit wenigstens einer Steuereinrichtung (12) zur Steuerung wenigstens der wenigstens einen kohärenten Signalquelle, **dadurch gekennzeichnet, dass** die Steuereinrichtung (12) zur Ausführung eines Verfahrens nach einem der vorhergehenden Ansprüche eingerichtet ist.

12. Computerprogramm umfassend Befehle, die bewirken, dass das Atominterferometer (11) nach Anspruch 11 die Verfahrensschritte nach einem der Ansprüche 1 bis 10 ausführt, wenn das Computerprogramm auf einem Rechner der Steuereinrichtung (12) des Atominterferometers (11) ausgeführt wird.
